# EUROPÄISCHE PATENTSCHRIFT

(11) **EP 1 965 916 B1**
(45) Veröffentlichungstag und Bekanntmachung des Hinweises auf die Patenterteilung: **25.05.2011**
(21) Anmeldenummer: 06827953.8
(22) Anmeldetag: 15.12.2006
(51) Int. Cl.: B01J 35/04, F01N 3/021, F01N 3/28, F23G 7/06, B01D 53/88

(54) **VERFAHREN UND WABENKÖRPER ZUM REINIGEN UND/ODER REGENERIEREN VON GASEN**
PROCESS AND HONEYCOMB BODY FOR PURIFYING AND/OR REGENERATING GASES
PROCEDE ET CORPS EN NID D'ABEILLES POUR L'EPURATION ET/OU LA REGENERATION DE GAZ

(30) Priorität: 16.12.2005 AT 20132005
(43) Veröffentlichungstag der Anmeldung: 10.09.2008
(73) Patentinhaber: Porzellanfabrik Frauenthal GmbH, 1090 Wien (AT)
(72) Erfinder: HAGG, Christoph, A-8010 Graz (AT); KRONABETER, Franz, A-8530 Deutschlandsberg (AT); SCHMUCK, Alfred, A-8530 Deutschlandsberg (AT)
(74) Vertreter: Holzer, Walter
(86) Internationale Anmeldenummer: PCT/AT2006/000518
(87) Internationale Veröffentlichungsnummer: WO 2007/068022

(56) Entgegenhaltungen:
- EP-A- 1 449 584
- EP-A1- 1 366 792
- EP-A1- 1 435 348
- EP-A2- 0 685 636
- DE-C1- 3 830 352
- US-A- 5 505 910

## Beschreibung

Die Erfindung betrifft Wabenkörper aus Keramikmaterial zur Verwendung in Anlagen zum Reinigen und/oder Regenerieren von Gasen.

Derartige Wabenkörper werden generell als prismatische Wabenkörper mit glatten Seitenwandflächen hergestellt. Dies ermöglicht ihren Einbau in Anlagen in zumindest einer Lage dicht an dicht, um keinen undefinierten Spalt zwischen den Wabenkörpern zu erhalten. Eine große Anzahl von nebeneinander und in Lagen übereinander gepackten Wabenkörpern erfährt bei hohen Temperaturen eine dementsprechend große Ausdehnung. Sind die Wabenkörper im Kaltzustand beispielsweise in eine Regeneratoranlage dicht eingebaut, wobei sie häufig durch Isolierstoffe an den Außenseiten zusammengepreßt werden, entsteht im heißen Betriebszustand eine hohe mechanische Beanspruchung zwischen den einzelnen Wabenkörpern. Wird der mechanische Druck auf einzelne Wabenkörper zu groß, gibt die keramische Struktur nach und der Wabenkörper zerbricht. Wird zusätzlich durch chemische Korrosion einerseits die mechanische Stabilität geschwächt und anderseits der Wärmedehnungskoeffizient (CTE) erhöht, kann dieser negative Effekt verstärkt eintreten, die Wabenkörper gehen zu Bruch, und ihre Funktion als Wärmespeicher wird stark beeinträchtigt.

Diverse Schadensberichte bzw. Beanstandungen bei der Anwendung von keramischen Wabenkörpern, die z.B. als Wärmetauscher in RTO-Regeneratoranlagen eingesetzt werden, haben gezeigt, daß die Wabenkörper in den obersten Regeneratorbettlagen oft zu dicht aneinander gepackt sind und dadurch im Betrieb Schaden durch mechanische Beanspruchung erleiden. Keramische Materialien, die als Wärmespeicher verwendet werden, haben einen bestimmten Wärmedehnungskoeffizienten (CTE) und dehnen sich entsprechend der Temperaturen in den verschiedenen Lagen eines Regeneratorbettes unterschiedlich aus. Zusätzlich ist beobachtet worden, daß Korrosionsmechanismen das Keramikmaterial während des Betriebes dahingehend verändern können, daß der CTE gegenüber dem Zustand vor der Inbetriebnahme ansteigt. Bei großen Querschnitten der Regeneratorbetten, was einer großen Anzahl von nebeneinander gepackten Wabenkörpern entspricht, kann es deshalb bei korrosionsbedingtem Anstieg des CTE, hohen Betriebstemperaturen und gleichzeitig zu dichter Packung der einzelnen Wabenkörper zu sehr hohen mechanischen Kräften kommen, die zur Zerstörung der betroffenen Wabenkörperlagen führen.

Die nachfolgende Tabelle zeigt verschiedene Betriebswerte.

**Tabelle 1: Ausdehnung verschiedener keramischer Wabenkörpertypen der obersten Regeneratorbettlage bei Betriebstemperatur**

| Wabenkörpertypen | Wabenkörperbreite L | Wärmedehnungskoeffizient | Δ Tox-RT | Wabenkörperausdehnung Δ L |
|---|---|---|---|---|
| | [mm] | [1/K] | °C | [mm] |
| NT | 150 | 6,5E-06 | 850 | 0,8 |
| CR10 | 150 | 4,50E-06 | 850 | 0,6 |
| MK20 | 150 | 2,20E-06 | 850 | 0,3 |
| chemischer Angriff 1 | 150 | 8,00E-06 | 850 | 1,0 |
| chemischer Angriff 2 | 150 | 9,00E-06 | 850 | 1,1 |

Infolge eines zu großen mechanischen Druckes, hervorgerufen durch Wärmedehnung und zu dichte Packung, können die Wabenkörper brechen. Die Wabenkörper sind z.B. seitlich von Betonsegmenten begrenzt und haben, bis auf die Seite, die der Isolierung zugewandt ist, keine Möglichkeit zur Ausdehnung.

Die EP 1 435 348 A1 lehrt einen Wabenkörper und ein Verfahren zu seiner Herstellung unter Verwendung von Abstandhaltern, die zwischen Wabenkörpern angeordnet sind, um ihnen einne spannungsfreie Ausdehnung zu ermöglichen. Nachteil dieser Lehre ist, daß die Abstandhalter entweder ganzflächig aufgeklebt sind und somit eine gasundurchlässige Fläche im Querschnitt des gesamten Filters bilden; oder die Abstandhalter sind punktförmig aufgeklebt, was immer noch zu dem Nachteil führt, daß sie in einem gesonderten Herstellungsschritt aufgebracht werden müssen.

Die DE 38 30 352 C1 offenbart eine Abgasreinigungsvorrichtung für Kraftfahrzeuge. Dort wird ein Wabenmonolith über stirnseitig angeordnete Distanzringe in einem Gehäuse zentriert. Nachteil dieser Ausführung ist, daß der Fachmann keinen Hinweis erhält, wie Wabenkörper spannungsfrei nebeneinander angeordnet werden können.

Gleiches gilt für die Lehre der EP 0 685 636 A2 zur Herstellung von Abgaskatalysatoren. Hier werden zwei Monolithen hintereinander in einem Gehäuse angeordnet und mit einem Block aus beispielsweise Trockeneis voneinander definiert beabstandet. Es soll nicht die spannungsfreie Ausdehnung der Monolithen nach Verdunsten des Trockeneises ermöglicht werden, sondern die freie Zugänglichkeit aller Kanäle des stromabwärts gelegenen Monolithen für das Gas.

Die EP 1 449 584 A1 zeigt einen wabenförmigen Körper mit einer stirnseitig unebenen Struktur. Dies ermöglicht beim Stapeln der Körper Querströmungen des Gases und die Zugänglichkeit aller stromabwärts gelegenen Kanäle.

Die US 5 505 910 gibt eine Katalysatorvorrichtung an, bei der wabenartige Katalysatorköper über gitterartige Verbindungselemente stirnseitig voneiander beabstandet sind.

Die Erfindung zielt darauf ab, die vorstehend geschilderten Probleme zu vermeiden und einen Wabenkörperaufbau zu schaffen, der bereits beim Einbau, speziell in den obersten Bettlagen, einen gewissen Abstand der Wabenkörper zueinander vorgibt, um eine Wärmedehnung zu ermöglichen.

Gegenstand der Erfindung ist ein Wabenkörper aus Keramikmaterial zur Verwendung in Anlagen zum Reinigen und/oder Regenerieren von Gasen, mit einem prismatischen Körper, der von einer Vielzahl von Gasströmungskanälen durchzogen ist, die in beiden Stirnseiten des Wabenkörpers ausmünden, bei welchem an mindestens zwei aneinandergrenzenden Seitenwänden jedes Wabenkörpers definierte Unebenheiten vorhanden sind. Der erfindungsgemäße Wabenkörper zeichnet sich dadurch aus, daß die Wabenkörperseitenwände mit Abstandhaltern versehen sind, die entweder durch gesondert aufgebrachte Elemente aus brennbarem Material oder durch Ausbuchtungen der Wabenkörperseitenwände gebildet sind.

Vorzugsweise ist der Wabenkörper ein extrudierter Wabenkörper.

Die erfindungsgemäße Anwendung solcher keramischer Wabenkörper hat zur Folge, daß an allen vier Seiten eines Wabenkörpers während des Einbaus z.B. in ein Regeneratorbett in jeder Bettlage ein der unebenen Seitenwandstruktur entsprechender Abstand zwischen den Wabenkörpern entsteht.

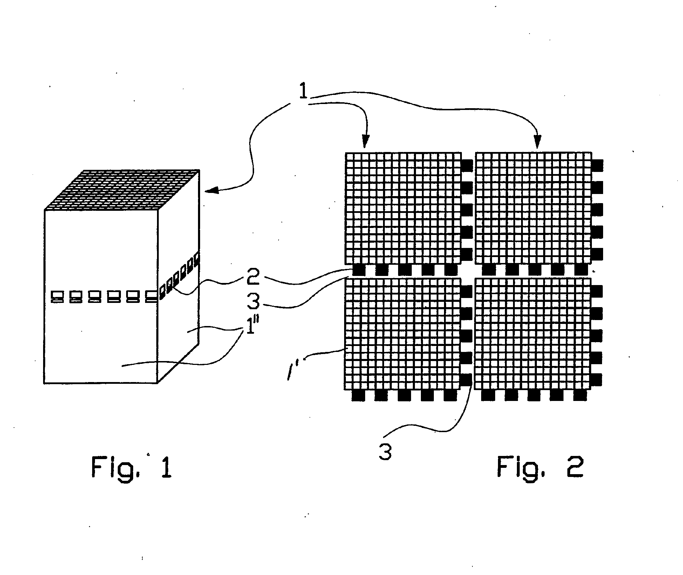

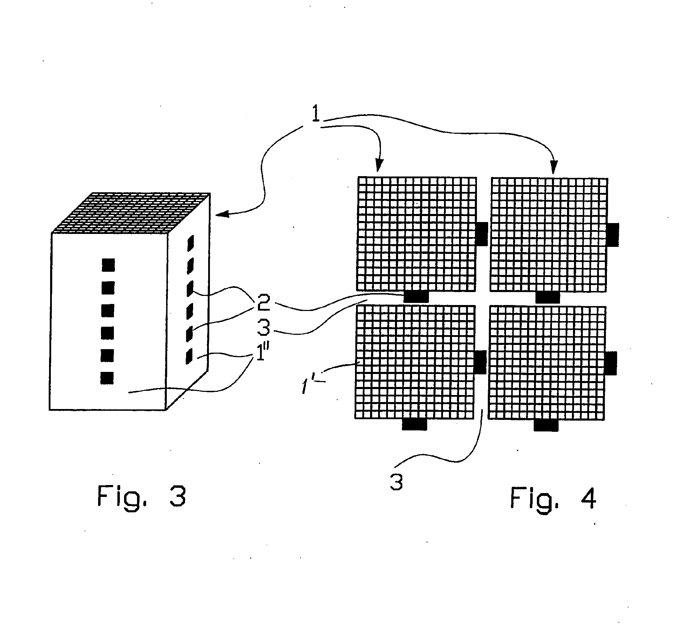

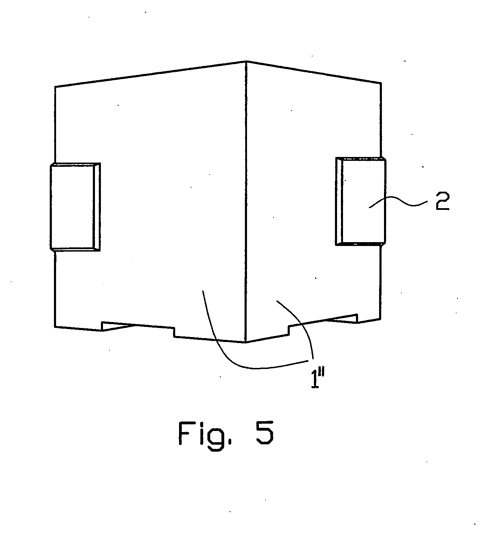

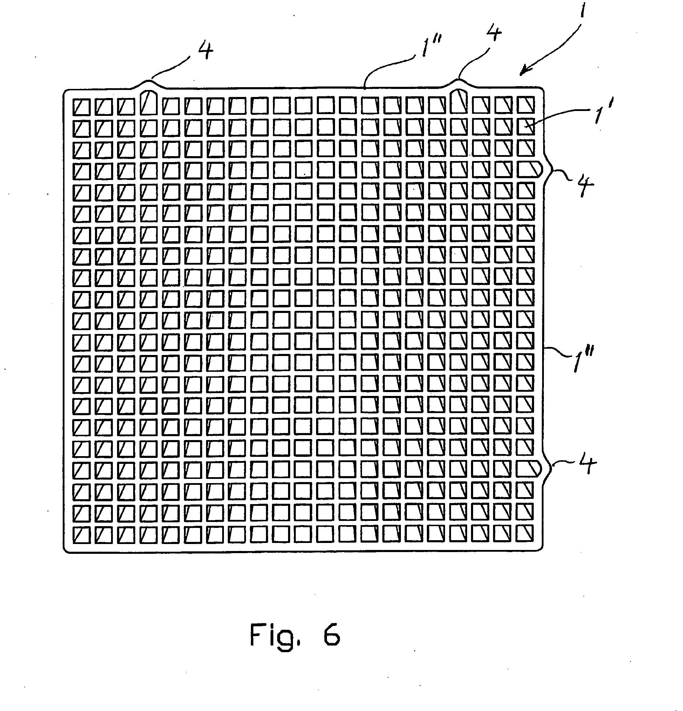

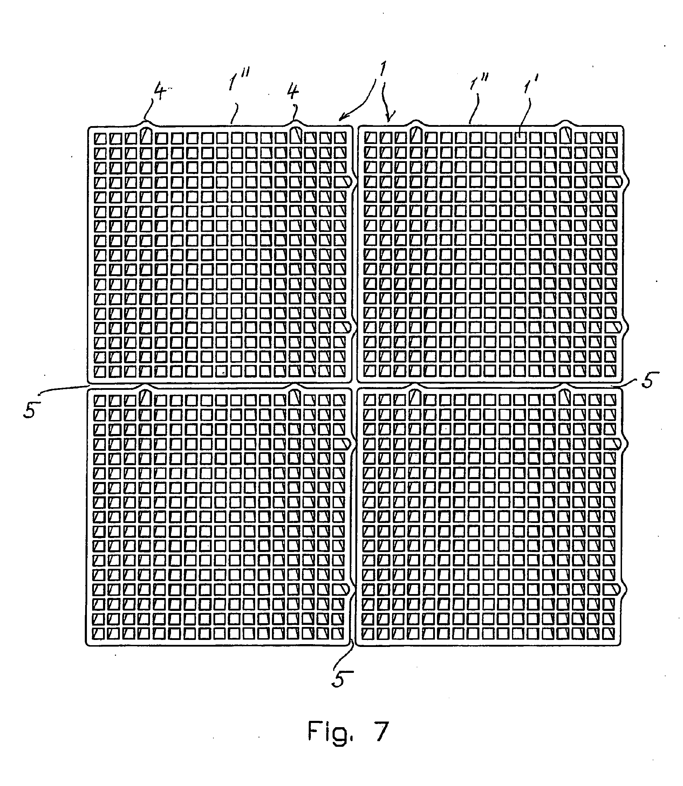

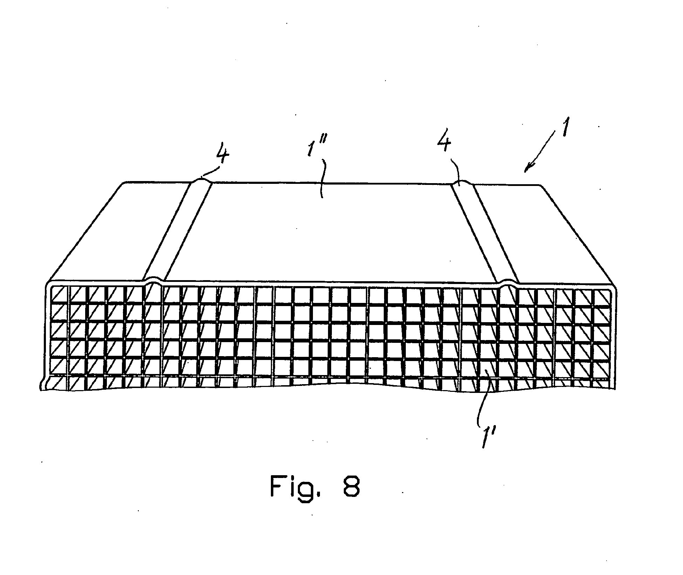

Die Erfindung wird nachfolgend an einem Ausführungsbeispiel unter Bezugnahme auf die Zeichnungen näher erläutert, die schematisch verschiedene Wabenkörper gemäß der Erfindung zeigen und deren Einbau z.B. in ein Regeneratorbett illustrieren. Fig. 1 ist eine schematische Ansicht einer ersten Ausführungsform eines Wabenkörpers, Fig. 2 zeigt ein Wabenkörperpaket in der Draufsicht, Fig. 3 zeigt eine zweite Ausführungsform der Erfindung, Fig. 4 illustriert den Einbau der Wabenkörper nach Fig. 3 in der Draufsicht, Fig. 5 zeigt eine dritte Ausführungsform, Fig. 6 eine vierte Ausführungsform, Fig. 7 in der Draufsicht den Einbau der vierten Ausführungsform und Fig. 8 ein Detail zu Fig. 6.

Gemäß Fig. 1 werden an mindestens zwei Seitenwänden 1" des aus Keramikmaterial strangextrudierten Wabenkörpers 1 mit einer Vielzahl von Kanälen 1' nach dem Brennvorgang Abstandhalter 2 aus Papier, Karton, Kunststoff, Metall oder anderen Materialien z.B. durch Ankleben vertikal oder horizontal befestigt. Diese Ausführung hat zur Folge, daß der nachträglich angebrachte Abstandhalter 2 im Betrieb bei hohen Temperaturen verbrennt. Der gemäß Fig. 2 erzeugte Spalt 3 zwischen den in einer Lage z.B. eines Regeneratorbettes angeordneten Wabenkörpern reduziert sich im Betrieb entsprechend der Wärmedehnung des Keramikmaterials.

Gemäß den Fig. 6 bis 8 wird die gewünschte Struktur der Wabenkörperseitenwand 1" durch die Form des Extrusionswerkzeuges festgelegt. Die zunächst ebene Seitenwand des Wabenkörpers 1 wird im Extrusionswerkzeug durch Fräsen der Außenseite des Werkzeugkernes und einen entsprechenden schlitzerzeugenden Rahmen festgelegt.

Eine definierte Ausbuchtung 4 mindestens zweier Seitenwände 1" hat zur Folge, daß beim Einbau der Wabenkörper 1 im Kaltzustand der Anlage zwischen den Wabenkörpern definierte Freiräume 5 entstehen. Nach der Inbetriebnahme und dem Aufheizen des Regeneratorbettes können sich die Wabenkörper entsprechend ihres Wärmedehnungskoeffizienten spannungsfrei ausdehnen. Die Abstandhalter 2 verbrennen oder brechen im Falle der strukturierten Seitenwand 1" ein (Sollbruchstelle).

Zusätzlich bietet der Einbau von Wabenkörpern im definierten Abstand zueinander die Nutzung der Wabenkörperseitenwandfläche als Wärmeaustauschfläche. Bei 300 mm hohen Wabenkörpern entspricht das einer Fläche von ca. 26,6 m²/m³. Bezogen auf die aktive Fläche verschiedener Wabenkörpertypen kann das eine Erhöhung der aktiven Wärmeaustauschfläche von 2 % (60 x 60 Zeller) bis 5 % (25 x 25 Zeller) bewirken.

## Patentansprüche

1. Wabenkörper aus Keramikmaterial zur Verwendung in Anlagen zum Reinigen und/oder Regenerieren von Gasen, mit einem prismatischen Körper, der von einer Vielzahl von Gasströmungskanälen durchzogen ist, die in beiden Stirnseiten des Wabenkörpers ausmünden, bei welchem an mindestens zwei aneinandergrenzenden Seitenwänden (1") des Wabenkörpers (1) definierte Unebenheiten vorhanden sind, **dadurch gekennzeichnet, daß** die Wabenkörperseitenwände (1") mit Abstandhaltern (2, 4) versehen sind, die entweder durch gesondert aufgebrachte Elemente aus brennbarem Material oder durch Ausbuchtungen (4) der Wabenkörperseitenwände (1") gebildet sind.

2. Wabenkörper nach Anspruch 1, **dadurch gekennzeichnet, daß** er ein extrudierter Wabenkörper (1) ist.

## Claims

1. Honeycomb body made of ceramics material for use in systems for purifying and/or regenerating gases, comprising a prismatic body which is penetrated by a plurality of gasflow ducts which open out at the two end faces of the honeycomb body, in which defined unevennesses are provided on at least two adjacent side walls (1") of the honeycomb body (1), **characterised in that** the side walls (1") of the honeycomb body are provided with spacers (2, 4) which are formed either by separately applied elements made of inflammable material or by bulges (4) in the side walls (1") of the honeycomb body.

2. Honeycomb body according to claim 1, **characterised in that** it is an extruded honeycomb body (1).

## Revendications

1. Corps en nid d'abeilles en matériau céramique destiné à être utilisé dans des installations d'épuration et/ou de régénération de gaz, présentant un corps prismatique traversé par une pluralité de canaux de passage de gaz qui débouchent dans les deux côtés avant du corps en nid d'abeilles, pour lequel des aspérités sont définies sur au moins deux parois latérales contiguës (1") du corps en nid d'abeilles (1), **caractérisé en ce que** les parois latérales (1") du corps en nid d'abeilles sont pourvues d'éléments d'écartement (2, 4) constitués d'éléments appliqués séparément en matériau combustible ou par des courbures (4) de parois latérales du corps en nid d'abeille (1").

2. Corps en nid d'abeilles selon la revendication 1, **caractérisé en ce qu'**il est un corps en nid d'abeille (1) extrudé.
